# EUROPEAN PATENT APPLICATION

(11) **EP 3 847 900 A1**
(43) Date of publication of application: **14.07.2021**
(21) Application number: 19857661.3
(22) Date of filing: 22.02.2019
(51) Int. Cl.: A23K 20/163, A23K 20/147, A23K 10/30

(54) **PET CHEW AND PREPARATION METHOD THEREFOR**

(30) Priority: 06.09.2018 CN 201811038066
(71) Applicant: Wenzhou Jinheng Pet Products Co., Ltd, Wenzhou, Zhejiang 325402 (CN)
(72) Inventor: ZHENG, Jingmin, Wenzhou, Zhejiang 325402 (CN)
(74) Representative: Lavoix
(86) International application number: PCT/CN2019/075847
(87) International publication number: WO 2020/048093

(57) **Abstract**

The present invention provides a pet chew, comprising edible glue, vegetable protein, humectant, dispersant agent, crosslinking agent, flavor substance, functional substance, nutrient and water, wherein the edible glue comprises gelatin, vegetable glue or a compound of the gelatin and the vegetable glue. The present invention further provides a preparation method of the foregoing pet chew. The pet chew provided by the present invention does not contain stodgy animal skins and the crosslinking reaction occurs under a specific process to combine some beneficial ingredients, such that the pet chew has a plurality of specific functions, has a relatively good flavor and relatively high palatability, and is more interesting and entertaining.

## Description

The present application claims priority of Chinese patent application No. 201811038066.4, titled "Pet Chew and Preparation Method Thereof', field in China on September 6, 2018, which is incorporated herein by reference in its entirety.

### BACKGROUND OF THE INVENTION

### TECHNICAL FIELD

The present invention belongs to the technical field of pet food, in particular to a pet chew and a preparation method thereof.

### BACKGROUND

As the standard of living and quality of living increasingly improve, the pet industry gradually springs up and develops rapidly to meet the needs of the more demanding; the pet industry is constantly introducing a wide range of pet food, toys and supplies, and in order to better meet the chewing nature of pets, many chewable products have come into being.

Chewable products currently available on the market take pigskin or cowhide as raw materials. The raw materials are first made into bones or rolls by steps of cleaning, bleaching and drying; then the bone-shaped or roll-shaped semi-products are combined with meat products and dried to obtain the chewable products. Such products have strong cracking resistance and durability, and can be chewed and played with by pets for a long time. However, such products made from animal skins lack substantial food smell and taste, so that pets do not get any fun when chewing such products. The majority of pets just take the chews as toys, resulting in a low utilization rate of functions, resource waste and environmental pollution. Therefore, it is urgent to research and develop some edible and playable chewable products with high palatability.

A patent with application No. 200510075310.0 discloses a pet food and a preparation method thereof. The pet food is made from lean meat of livestock and poultry by the steps of slicing the raw materials, arranging the meat slices into a whole block, cutting the whole block into meat strips and tying or pressing the mean strips to form a bone-shaped product or products in other shapes or to form pet toys in different shapes according to the pets' preferences. The meat-made bones of this invention overcome the shortcoming of poor palatability of chewable products just made from animal skin material, but the preparation process imposes particularly high requirements on the meat of livestock and poultry. Moreover, the meat slices tend to break owing to a poor splicing property when being arranged into a whole block, bringing inconvenience to the next tying operation. This process consumes labor, wastes raw materials, reduces processing efficiency, goes against continuous production and is not conductive to reducing the product cost.

According to another method, plant ingredients and meat are combined; the compound is heated and extruded to form bone-shaped or roll-shaped products and the bone-shaped or roll-shaped products are dried to produce pet snacks such as pet chews. Such pet chews are improved in the palatability and overcome the shortcoming that pigskin and cowhide do not digest easily. Moreover, compared with chews made from animal skins, such type of chews has poor ductility, chewiness and oral cleaning function.

Therefore, it is urgent to provide a pet chew to overcome existing products.

### BRIEF SUMMARY OF THE INVENTION

One objective of the present invention is to provide a healthy, edible, playable and multi-functional pet chew.

Another objective of the present invention is to provide a preparation method of the pet chew.

To achieve the above-mentioned objectives, on one hand, the present invention discloses a pet chew, comprising the following raw material ingredients in part by weight:
100-200 parts of edible glue
80-150 parts of vegetable protein
80-150 parts of humectant
1-10 parts of dispersant agent
1-5 parts of crosslinking agent
1-5 parts of flavor substance
1-5 parts of functional substance
5-10 parts of botanical components
0.05-2 parts of nutrient, and,
300-1000 parts of water.

As a further improvement of an embodiment of the present invention, the edible glue comprises gelatin or a compound of the gelatin and at least one of carrageenan, guar gum and xanthan gum.

As a further improvement of an embodiment of the present invention, the vegetable protein comprises at least one of soybean protein, peanut protein, pea protein, rice protein and corn protein.

As a further improvement of an embodiment of the present invention, the functional substance comprises at least one of teeth cleaning substance, hair beautifying substance, joint protecting substance, digestion promoting substance and nutrient.

As a further improvement of an embodiment of the present invention, the teeth cleaning substance comprises at least one of mint powder, parsley powder and sodium pyrophosphate.

As a further improvement of an embodiment of the present invention, the hair beautifying substance comprises at least one of lecithin, dried marine algae powder and fish oil.

As a further improvement of an embodiment of the present application, the joint protecting substance comprises at least one of chondroitin and glucosamine hydrochloride.

As a further improvement of an embodiment of the present invention, the humectant comprises at least one of glycerin, sorbitol and propanediol.

As a further improvement of an embodiment of the present application, the dispersant agent is phosphate complex.

As a further improvement of an embodiment of the present invention, the crosslinking agent is glutamine transaminase.

As a further improvement of an embodiment of the present invention, the flavor substance is made from the following ingredient in part by weight:
5-15 parts of soft sugar
0.05-1 part of refined salt
4-15 parts of plant starch, and,
1-5 parts of cheese.

As a further improvement of an embodiment of the present invention, the nutrient comprises at least one of vitamin complex, complex mineral substance, aminoglucose, chondroitin sulfate, oligoisomaltose, linoleic acid and linolenic acid.

As a further improvement of an embodiment of the present invention, the flavor substance further comprises high-intensity sweetener; and the high-intensity sweetener is at least one of aspartame, sucralose, sodium cyclamate and acesulfame.

As a further improvement of an embodiment of the present invention, the botanical components comprise the following ingredients in part by weight:
1-5 parts of vegetable, and,
1-5 parts of fruit.

As a further improvement of an embodiment of the present invention, the vegetable is at least one of tomato, spinach, carrot, broccoli, cabbage, green beans, potato, sweet potatoes and pumpkin.

As a further improvement of an embodiment of the present invention, the fruit is at least one of apple, banana, kiwi fruit, pineapple and papaya.

On the other hand, the present invention further discloses a preparation method of the pet chew, comprising the following steps:

S1. dissolving the edible glue in water prepared by a predetermined ratio to obtain an aqueous solution of edible glue;

S2. putting vegetable protein, dispersant agent, crosslinking agent, humectant, flavor substance, functional substance, botanical components and nutrient in the aqueous solution of edible glue obtained in step S1 in sequence according to the predetermined ratio, stirring and dissolving to obtain a mixture of chew raw materials;

S3. grinding the mixture of chew raw materials obtained in step S2 using a grinding mill, and stirring to obtain a homogeneous miscible liquid of chew raw materials;

S4. allowing the miscible liquid of chew raw materials obtained in step S3 to perform a crosslinking reaction at a temperature of 35°C-45°C for a reaction time of equal to or greater than 24 hours; and,

S5. drying the product obtained after the crosslinking reaction in an oven until the water content is below 18% of the total weight of the product.

As a further improvement of an embodiment of the present invention, step S5 further comprises steps of, when the water content of the product reaches 30%-34% after drying and crosslinking, forming the product into a desired shape and then continuously drying the shaped product until the water content is below 18%, wherein the drying temperature is controlled to be between 50°C-80°C.

present invention has the following beneficial effects: the present invention does not contain stodgy animal skins such as cowhide, but uses vegetable glue or animal glue as the raw materials, and the crosslinking reaction proceeds under special process to combine some beneficial substances, such that the pet chew has a plurality of specific functions such as teeth cleaning, joint protection and intestinal health protection, easy to digest, supplementation of other nutrient, etc.; moreover, the present invention has a relatively good flavor and relatively high palatability; owing to the crosslinking effect obtained under specific conditions, the product has relatively high ductility, allows pets to enjoy chewing, and is more interesting and entertaining.

### DETAILED DESCRIPTION OF THE INVENTION

To make the objectives, technical solution and advantages of the present application much clear, a clear and complete description of the technical solutions of the present application will be given below in connection with specific embodiments of the present application. Apparently, the described embodiments are just a part of the embodiments of the present application, but not all embodiments. Based on the embodiments in the application, all other embodiments made by an ordinarily skilled in the art without creative labor should fall within the protective scope of the application.

The embodiments described below are exemplary embodiments, which are used for interpreting the present invention only and cannot be understood as limiting the present invention.

The present invention discloses a pet chew, comprising the following raw materials in part by weight:
100-200 parts of edible glue
80-150 parts of vegetable protein
80-150 parts of humectant
1-10 parts of dispersant agent
1-5 parts of crosslinking agent
1-5 parts of flavor substance
1-5 parts of functional substance
5-10 parts of botanical components
0.05-2 parts of nutrient, and,
300-1000 parts of water.

As a further improvement of an embodiment of the present invention, the edible glue comprises gelatin or a compound of the gelatin and at least one of carrageenan, guar gum and xanthan gum.

In the prior art, animal proteins are usually used as the raw materials to prepare of chews. For example, proteins of pork, beef, mutton, poultry and fish all have all kinds of amino acids respectively in an amount equal to the amount required by animals, but chews prepared by using animal skins as the raw material lack the substantial food smell and flavor, and animals chewing such type of chewable products do not get joy. The majority of pets just take the chewable products as toys, resulting in a low utilization rate of functions, resource waste and environmental pollution. Gelatin is taste-less, odor-less, and white or light yellow semi-transparent slice or powder with a little luster, obtained after partly degradation of collagen in connective tissues such as animal skins, bones and sarcolemma. Gelatin absorbs cold water to expand, and is soluble in hot water. Gelatin further has rich proteins, and is a very good replacement choice of protein donor.

As a further improvement of an embodiment of the present invention, the vegetable protein comprises at least one of soybean protein, peanut protein, pea protein, rice protein and corn protein. In specific embodiments, the vegetable protein is preferably soybean protein.

As a further improvement of an embodiment of the present invention, the functional substance comprises at least one of teeth cleaning substance, hair beautifying substance, joint protecting substance, digestion promoting substance and nutrient. In specific embodiments of the present invention, to meet various demands of pets, raw materials of chews in prior art are added with functional substances, such that pets get healthier while playing with the chews.

As a further improvement of an embodiment of the present invention, specifically, the teeth cleaning substance comprises at least one of mint powder, parsley powder and sodium pyrophosphate.

As a further improvement of an embodiment of the present invention, the hair beautifying substance comprises at least one of lecithin, dried marine algae powder and fish oil.

As a further improvement of an embodiment of the present application, the joint protecting substance comprises at least one of chondroitin and glucosamine hydrochloride.

As a further improvement of an embodiment of the present invention, the humectant comprises at least one of glycerin, sorbitol and propanediol.

As a further improvement of an embodiment of the present application, the dispersant agent is phosphate complex.

As a further improvement of an embodiment of the present invention, the crosslinking agent is glutamine transaminase.

As a further improvement of an embodiment of the present invention, the flavor substance is made from the following ingredient in part by weight:
5-15 parts of soft sugar
0.05-1 part of refined salt
4-15 parts of plant starch, and,
1-5 parts of cheese.

As a further improvement of an embodiment of the present invention, the nutrient comprises at least one of vitamin complex, complex mineral substance, aminoglucose, chondroitin sulfate, oligoisomaltose, linoleic acid and linolenic acid.

As a further improvement of an embodiment of the present invention, the flavor substance further comprises high-intensity sweetener; and the high-intensity sweetener is at least one of aspartame, sucralose, sodium cyclamate and acesulfame.

As a further improvement of an embodiment of the present invention, the botanical components comprise the following ingredients in part by weight:
1-5 parts of vegetable, and,
1-5 parts of fruit.

As a further improvement of an embodiment of the present invention, the vegetable is at least one of tomato, spinach, carrot, broccoli, cabbage, green bean, potato, sweet potato and pumpkin.

As a further improvement of an embodiment of the present invention, the fruit is at least one of apple, banana, kiwi fruit, pineapple and papaya.

On the other hand, the present invention further discloses a preparation method of the pet chew, comprising the following steps:

S1. dissolving the edible glue in water prepared by a predetermined ratio to obtain an aqueous solution of edible glue;

S2. putting vegetable protein, dispersant agent, crosslinking agent, humectant, flavor substance, functional substance, botanical components and nutrient in the aqueous solution of edible glue obtained in step S1 in sequence according to the predetermined ratio, stirring and dissolving to obtain a mixture of chew raw materials;

S3. grinding the mixture of chew raw materials obtained in step S2 using a grinding mill, and stirring to obtain a homogeneous miscible liquid of chew raw materials;

S4. allowing the miscible liquid of chew raw materials obtained in step S3 to perform a crosslinking reaction at a temperature of 35°C-45°C for a reaction time of equal to or greater than 24 hours; and,

S5. drying the product obtained after the crosslinking reaction in an oven until the water content is below 18% of the total weight of the product.

As a further improvement of an embodiment of the present invention, step S5 further comprises steps of, when the water content of the product reaches 30-34% after drying and crosslinking, making the product into a desired shape, and then continuously drying the shaped product until the water content is below 18%, wherein the drying temperature is controlled to be between 50°C-80°C.

In specific embodiments, the preparation method of the pet chew further comprises the following steps and processing conditions: As a further improvement of an embodiment of the present invention, the dissolving step in step S1 specifically comprises blending edible glue and water in a mass ratio of 1: 3 and placing the mixture in a 60°C-70°C water bath to dissolve the edible glue, wherein the edible glue is preferably gelatin.

As a further improvement of an embodiment of the present invention, the stirring in step S2 refers to stirring the mixture of aqueous solution of edible glue prepared in step S 1 and vegetable protein, glutamine transaminase, glycerin, potassium sorbate and sorbitol; and, the vegetable, fruit, nutrient and teeth cleaning substance are added at the same time.

As a further improvement of an embodiment of the present invention, grinding in step S3 refers to fully grinding the mixture of chew raw materials obtained in step S2, such that the chew raw materials are better dissolved in the aqueous solution of edible glue to obtain the miscible liquid of chew raw materials.

As a further improvement of an embodiment of the present invention, the crosslinking reaction in step S4 is proceed in a water bath and the mixture of chew raw materials obtained in step S3 is allowed to perform the crosslinking reaction at an ambient temperature of 35°C-45°C for at least 24 hours.

As a further improvement of the embodiment of the present invention, the drying process in step S5 is also involved in an extrusion molding process, which specifically comprises the following steps:
1) extruding and molding the product obtained after the crosslinking reaction using an extruder mold;
2) drying the semi-product molded by extrusion until the water content reaches 30%-34% by weight, wherein the drying temperature is controlled to be between 50°C-80°C;
3) forming the semi-dried product into the required shape;
4) continuously drying the shaped product until the water content is below 18% by weight, wherein the drying temperature is controlled to be between 50°C-80°C.

As a further improvement of the embodiment of the present invention, the preparation method further comprises step S6 of sorting the dried product, performing metal detection, and sealing and packaging the product to obtain a finished product.

As a further improvement of the embodiment of the present invention, the extruder mold is a heart-shaped mold, a cylindrical mold, a Striped mold, a sheet-like mold or a bone-shaped mold, and correspondingly, the prepared chew type pet food is heart-shaped, rod-shaped, spherical, ponytail-shaped, twist-shaped, joint-shaped or bone-shaped.

Specifically, raw materials and additives for preparing the pet chew according to the embodiments and their part ratios can be seen in the table below. There are a total of eight groups of specific embodiments different in materials and ratios.

**Embodiment 1**

| Formulation | Ratio (parts) |
|---|---|
| Gelatin | 150 |
| Soybean protein | 80 |
| Glycerin | 80 |
| Sorbitol | 10 |
| Phosphate complex | 10 |
| Glutamine transaminase | 5 |
| Soft sugar | 3 |
| Pigment | 3 |
| Carrot, broccoli | 5 |
| Chondroitin | 5 |
| Water | 600 |

**Embodiment 2**

| Formulation | Ratio (parts) |
|---|---|
| Gelatin | 150 |
| Soybean protein | 110 |
| Glycerin | 105 |
| Sorbitol | 4 |
| Phosphate complex | 4 |
| Glutamine transaminase | 3 |
| Refined salt | 1 |
| Pigment | 3 |
| Apple, pineapple | 6 |
| Mint powder | 3 |
| Water | 600 |

**Embodiment 3**

| Formulation | Ratio (parts) |
|---|---|
| Gelatin | 150 |
| Soybean protein | 110 |
| Glycerin | 105 |
| Propanediol | 3 |
| Phosphate complex | 4 |
| Glutamine transaminase | 3 |
| Cheese | 3 |
| Pigment | 2 |
| Spinach, pumpkin | 10 |
| Dried marine algae powder | 1 |
| Water | 600 |

The present invention has the following beneficial effects: the present invention does not contain stodgy animal skins such as cowhide, but uses vegetable glue or animal glue as the raw materials, and the crosslinking reaction proceeds under special process to combine some beneficial substances, such that the pet chew has a plurality of specific functions such as teeth cleaning, joint protection and intestinal health protection, easy to digest, supplementation of other nutrient, etc.; moreover, the present invention has a relatively good flavor and relatively high palatability; owing to the crosslinking effect obtained under specific conditions, the product has relatively high ductility, allows pets to enjoy chewing, and is more interesting and entertaining.

It should be understood that the description is described by the embodiments, but it is not necessary that every embodiment includes an independent technical solution. The narration mode of the description is for clear interpretation only. Those skilled in the art should deem the description as a whole piece, and the technical solutions in various embodiments can also be properly combined to generate other embodiments that can be understood by those skilled in the art.

A series of detailed description listed above are merely used to specifically illustrate the feasible embodiments of the present invention, and are not used to limit the protective scope of the present invention. All equivalent embodiments or changes made without departing from the technological spirit of the present invention shall fall within the protective scope of the present invention.

## Claims

1. A pet chew, comprising the following raw materials in part by weight:
100-200 parts of edible glue
80-150 parts of vegetable protein
80-150 parts of humectant
1-10 parts of dispersant agent
1-5 parts of crosslinking agent
1-5 parts of flavor substance
1-5 parts of functional substance
5-10 parts of botanical components
0.05-2 parts of nutrient, and,
300-1000 parts of water.

2. The pet chew according to claim **1,** wherein the edible glue comprises gelatin or a compound of the gelatin and at least one of carrageenan, guar gum and xanthan gum.

3. The pet chew according to claim **1,** wherein the vegetable protein comprises at least one of soybean protein, peanut protein, pea protein, rice protein and corn protein.

4. The pet chew according to claim **1,** wherein the functional substance comprises at least one of teeth cleaning substance, hair beautifying substance, joint protecting substance, digestion promoting substance and nutrient.

5. The pet chew according to claim **4,** wherein the teeth cleaning substance comprises at least one of mint powder, parsley powder, sodium pyrophosphate, green tee powder, calcium carbonate, calcium hydrogen phosphate dihydrate, calcium phosphate dibasic anhydrous, etc.;
the hair beautifying substance comprises at least one of lecithin, dried marine algae powder, seal oil, liver powder and fish oil;
the joint protecting substance comprises at least one of chondroitin, glucosamine hydrochloride, composite collagen, vitamin C, calcium powder, vitamin D, etc.; and,
the digestion promoting substance comprises at least one of probiotics, yam, malt, tangerine peel, radix pseudostellariae, hawthorn, lactobacillus, etc.

6. The pet chew according to claim **1,** wherein the humectant is at least one of glycerin, sorbitol, propanediol, polyethylene glycol, xylitol (also called pentitol), etc.;
the dispersant agent is phosphate complex; and,
the crosslinking agent is glutamine transaminase.

7. The pet chew according to claim **1,** wherein the flavor substance comprises the following ingredients in part by weight:
5-15 parts of soft sugar
0.05-1 part of refined salt
4-15 parts of plant starch, and,
1-5 parts of cheese.

8. The pet chew according to claim **1,** wherein the nutrient comprises at least one of vitamin complex, complex mineral substance, aminoglucose, chondroitin sulfate, oligoisomaltose, linoleic acid and linolenic acid.

9. A preparation method of a pet chew, comprising the following steps:
S1. dissolving the edible glue in water prepared by a predetermined ratio to obtain an aqueous solution of edible glue;
S2. putting vegetable protein, dispersant agent, crosslinking agent, humectant, flavor substance, functional substance, botanical components and nutrient in the aqueous solution of edible glue obtained in step S1 in sequence according to the predetermined ratio, stirring and dissolving to obtain a mixture of chew raw materials;
S3. grinding the mixture of chew raw materials obtained in step S2 using a grinding mill, and stirring with heating to obtain a homogeneous miscible liquid of chew raw materials;
S4. allowing the miscible liquid of chew raw materials obtained in step S3 to perform a crosslinking reaction at a temperature of 35°C-45°C for a reaction time of equal to or greater than 24 hours; and
S5. drying the product obtained after the crosslinking reaction in an oven until the water content is below 18% of the total weight of the product.

10. The preparation method of the pet chew according to claim **9,** wherein step S5 further comprises steps of, when the water content of the product reaches 30%-40% after drying and crosslinking, making the product into a desired shape, and then continuously drying the shaped product until the water content is below 18%, wherein the drying temperature is controlled to be between 30°C-80°C.
